(19) Europäisches Patentamt
European Patent Office
Office européen des brevets

(11) **EP 3 505 903 B1**

(12) **EUROPEAN PATENT SPECIFICATION**

(45) Date of publication and mention
of the grant of the patent:
**14.10.2020 Bulletin 2020/42**

(51) Int Cl.:
***G01M 17/04*** *(2006.01)*        ***F16F 9/32*** *(2006.01)*

(21) Application number: **17211260.9**

(22) Date of filing: **30.12.2017**

(54) **A METHOD FOR DETECTING MANUFACTURING DEFECTS OF HYDRAULIC DAMPERS, ESPECIALLY SHOCK ABSORBERS, AND A DEVICE FOR DETECTING MANUFACTURING DEFECTS OF HYDRAULIC DAMPERS, ESPECIALLY SHOCK ABSORBERS**

VERFAHREN ZUR DETEKTION VON HERSTELLUNGSFEHLERN AN HYDRAULISCHEN DÄMPFERN, INSBESONDERE STOSSDÄMPFERN, UND VORRICHTUNG ZUR DETEKTION VON HERSTELLUNGSFEHLERN AN HYDRAULISCHEN DÄMPFERN, INSBESONDERE STOSSDÄMPFERN

PROCÉDÉ PERMETTANT DE DÉTECTER DES DÉFAUTS DE FABRICATION D'AMORTISSEURS HYDRAULIQUES, NOTAMMENT DES ABSORBEURS DE CHOCS ET DISPOSITIF PERMETTANT DE DÉTECTER DES DÉFAUTS DE FABRICATION D'AMORTISSEURS HYDRAULIQUES, NOTAMMENT DES ABSORBEURS DE CHOCS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.07.2019 Bulletin 2019/27**

(73) Proprietor: **EMT-SYSTEMS Sp. z o.o.**
**44-100 Gliwice (PL)**

(72) Inventors:
• **Czop, Piotr**
  **44-100 Gliwice (PL)**
• **Braska, Damian**
  **44-100 Gliwice (PL)**

• **Hetmanczyk, Mariusz**
  **44-100 Gliwice (PL)**
• **Sloniewski, Jakub**
  **44-100 Gliwice (PL)**
• **Wszolek, Grzegorz**
  **44-100 Gliwice (PL)**

(74) Representative: **Lampart, Jerzy**
**Kancelaria Patentowa**
**Ul. Wyzwolenia 1b**
**42-624 Ossy (PL)**

(56) References cited:
**EP-B1- 0 779 972          CN-A- 103 018 056**
**KR-B1- 100 745 356**

**Description**

The invention relates to a method and device for detecting manufacturing defects of hydraulic dampers, said method enabling classification of the condition, particularly in the case of a single stroke of the piston rod of a hydraulic damper. The present invention enables detecting defects in piston rod guide, piston rod packing, base valve, piston valve, plate valves, valve plates. The invention is applicable to hydraulic single tube and twin tube shock absorbers.

The known methods of testing shock absorbers, the examples of which are those described in patent applications EP 86302935 A2, EP 86402253 B1, EP86402254 B1, EP 89907781 B1, EP 94102441 B1, EP 94115944 A2, EP 95930380 B1, EP 98122896 B1, KR 100745356 B1, CN 103018056 A may be classified into two basic groups which include the following categories:

- bench methods of testing shock absorbers installed in vehicle suspension:

  ○ forced vibration method,
  ○ free vibration method:

    ▪ with variable vibration amplitude,
    ▪ with constant vibration amplitude,

  ○ test platform methods,
  ○ method of vibration analysis as a measure of the technical condition of vehicle suspension components,

- methods of testing shock absorbers not installed in a vehicle:

    ○ on indicator test rigs,
    ○ on servo-hydraulic machines,
    ○ on test rigs with manual forcing of shock absorber motion.

Solutions applied to test shock absorbers installed in vehicle suspensions have numerous limitations which make them useless for testing shock absorbers on production lines. First of all, they are intended for diagnostic and control tests of the overall shock absorber capacity to damp vibrations, they do not provide information about the type of shock absorber damages and manufacturing defects of the tested shock absorber. The equipment may measure parameters that determine the operating condition of the shock absorber. Moreover, in the case of this type of equipment, the information provided on the condition of the shock absorber is of qualitative nature primarily. Measurements on devices of this type strongly depend on the value of tyre pressure, which affects the determined characteristics, and are characterized by the lack of adjustment of the test parameters to the variable properties of the tested shock absorbers. Equipment of this type cannot be used on shock absorber production lines because of the manner of effecting the measurement.

At the stage of designing and manufacture of hydraulic shock absorbers, the characteristics and technical condition of hydraulic dampers are determined by methods for testing shock absorbers not installed in vehicle suspensions. In these methods use is made of mechanical electrically-driven actuators that compress and decompress the shock absorber, of electromechanical vibration inducers or of servo-hydraulic machines.

Testing of shock absorbers not installed in a vehicle typically includes:

  1. determination of operating characteristics (damping force vs. speed of shock absorber piston rod, damping force vs. displacement of shock absorber piston rod),
  2. determination of reference vibration characteristics,
  3. detection of defects resulting from manufacturing errors,
  4. checking the reliability and durability of dampers under conditions as close as possible to operating conditions.

The major disadvantages of the other bench methods of testing shock absorbers not installed in vehicles include:

  1. on electromechanical test stands:

    ▪ high degree of structural complexity of the test stand,
    ▪ lack of the ability to quickly assess the condition of hydraulic shock absorbers,
    ▪ lengthy installation and dismantling of the tested component,
    ▪ long measurement time,

- need to involve highly qualified operators,
- long test preparation time,
- high cost of test,

2. on servo-hydraulic machines:

- high degree of structural complexity of the test stand,
- lack of the ability to quickly assess the condition of hydraulic shock absorbers,
- high cost of test stand,
- lengthy installation and dismantling of the tested component,
- long measurement time,
- need to involve highly qualified operators,
- high cost of test,

3. manual forcing of shock absorber motion (dedicated test stands on quality control production lines):

- moving the rod of a hydraulic shock absorber under unrepeatable values of force and time,
- processing of measurement results is not automated,
- classification of the condition depends on the test stand operator's expertise.

So far, no definitive procedures of classifying the condition of vehicle shock absorbers have been developed for the bench test methods presented above of shock absorbers not installed in vehicles.

The method according to the invention for detecting manufacturing defects of hydraulic dampers, especially hydraulic shock absorbers, includes at least one of two phases, wherein phase one consists of subsequent operations of the measurement procedure, followed by automatic pre-processing of the vibration acceleration signal. Next, the vibration acceleration signal is processed; then the signal is processed using an FFT algorithm; then statistical characteristics of the spectrum, such as the mean, variance and standard deviation, are determined; then the values of boundary characteristics for each of the n spectral domain ranges are determined. Phase two includes, in sequence, the measurement procedure, automatic pre-processing of the vibration acceleration signal, additional processing of the vibration acceleration signal, processing of the signal using the FFT algorithm, determination of the values of upper and lower number of exceedance of boundary characteristics, comparison of the sum of the upper and lower number of exceedance of boundary characteristics with the boundary value and, based on that, indication of the classification result in the form of one of two conditions: working or defective . The measurement procedure consists of the following steps: first, the hydraulic damper is placed on a fixing plate and fixed in place; then the forcing actuator moves down at a speed controlled by the control system and attains a position in which the accelerometer fastened to the piston rod of the forcing actuator makes contact with the end of the piston rod of the hydraulic damper, after that the movement at the speed controlled by the control system is continued until the forcing actuator attains the set outward working position $h_{TH}$, whereas the vibration acceleration signal is recorded throughout the duration of the outward movement of the piston rod of the forcing actuator. Above all, however, the hydraulic damper is fixed in place during the measurement by clamping it with a hydraulic damper blocking actuator, and the hydraulic damper is positioned so that the longitudinal axis of the hydraulic damper piston rod is directed upwards, whereby the vibration acceleration is recorded by the accelerometer which is secured to the end of the piston rod of the forcing actuator, and by using standard sample hydraulic dampers in the phase of determining boundary characteristics, said standard sample hydraulic dampers being of a design identical to that of the tested hydraulic damper. In the process above automatic clipping of the signal is effected in the time domain by the range of $t_0$-$t_s$, wherein the $t_0$ point is determined by the instant the accelerometer comes into contact with the end of the hydraulic damper piston rod, and in order to determine the boundary characteristics an iteratively determined maximum correction factor of the standard deviation $a_{max}$ and adjusted standard deviation $\sigma_{cj}$ are used.

In the iterative determination of the standard deviation correction factor $a_{max}$ in every step of the iteration algorithm the value of the standard deviation correction factor is incremented by the value of the parameter $\Delta a$ within the range of $(0.. a_{max})$, where $a_{max}$ takes the value of, $a_k$, which for each of the $n$ frequency intervals satisfies the condition that for each value $w_{ji}$, where $j \in \langle 1.. n \rangle$ and $i \in \langle 1.. k_{th} \rangle$:

$$(w_{j_i} < \mu_j + a_k \cdot \sigma_j) \; and \; (w_{j_i} > \mu_j - a_k \cdot \sigma_j)$$

where:
$j \in \langle 1{:}n \rangle$

$w_{ji}$ - $i$-th measured value in the set of $k_{TH}$ measurements within the defined frequency interval,
$a_k$ - current value of the standard deviation correction factor for the $k$-th iteration,
$k$ - successive iteration number,
$\sigma_j$ - value of standard deviation in the set of $k_{TH}$ measurements within the given frequency interval,

$\mu_j$ - mean value in the set of $k_{TH}$ measurements within the given frequency interval.

The adjusted standard deviation is determined from the function:

$$\sigma_{c_j} = \left(a_{max} \cdot \left(1 - x_j\right) + b\right) \cdot \sigma_j$$

where:
$j \in \langle 1:n \rangle$

$\sigma_{c_j}$ - adjusted standard deviation for the given frequency interval,
$a_{max}$ - maximum standard deviation correction factor,

$x_j$ - ratio of the value of variance to the value of maximum variance for the given frequency interval, $x_j = \dfrac{\sigma_j^2}{\sigma_{max}^2}$

$b$ - basic deviation adjustment multiplication factor selected by the user, preferably equal to 3,
$\sigma_j$ - standard deviation for the given frequency interval

The device for detecting manufacturing defects of hydraulic dampers, especially shock absorbers, comprises a frame, to the rear part of which is attached a control cabinet which houses a control system and a measuring computer of the control panel which is attached to the front part of the frame, a fixing plate mounted in the inner space of the frame, actuating system in the rear part of the inner space of the frame, the said actuating system driving the forcing actuator which pushes the piston rod, an accelerometer attached to the end of the piston rod of the forcing actuator in such manner that the axis of the piston rod of the hydraulic damper and the axis of the accelerometer are parallel to each other, preferably arranged in one axis. The shock absorber seat, in which the shock absorber's end opposite the piston rod is placed, is made of plastic of Shore A hardness 93-98 and is designed to isolate vibrations of the hydraulic damper from vibrations transmitted by the machine frame from the machine surroundings. The front side of the plate located in the front part of the machine has its upper edge inclined from the vertical of the machine towards the inside of the machine so as to enable placing a shock absorber in the axis of forcing actuator operation and to prevent falling out of the shock absorber under gravity.

The proposed method and device for detecting manufacturing defects of hydraulic dampers, especially hydraulic shock absorbers, enable bench testing on a shock absorber production line within a production tact in an automatic cycle, and enables fast classification of the condition of hydraulic dampers without engaging complex measuring systems while maintaining measurement repeatability and based on developed algorithms and structural design. Moreover, the method disclosed enables testing irrespective of the stand operator's expertise and experience.

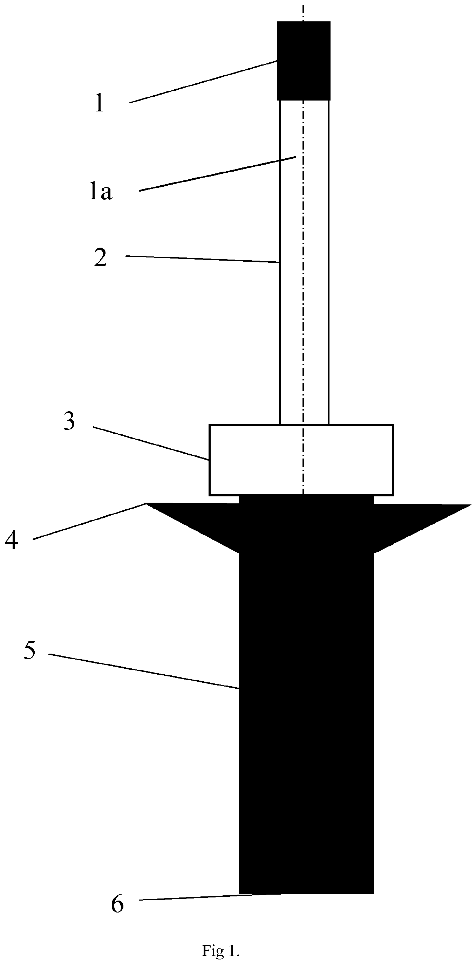

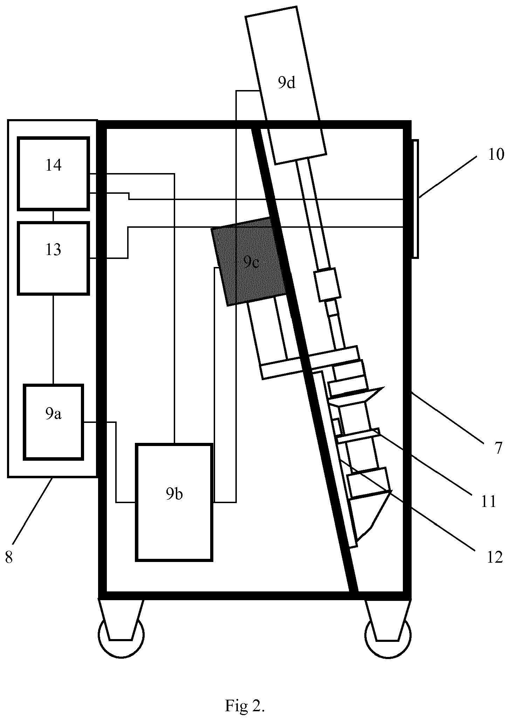

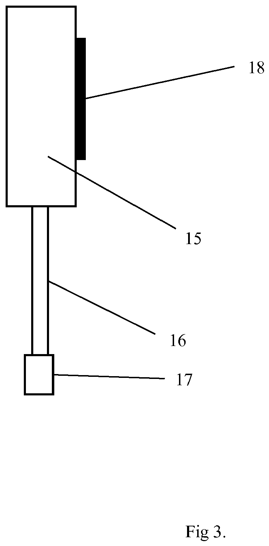

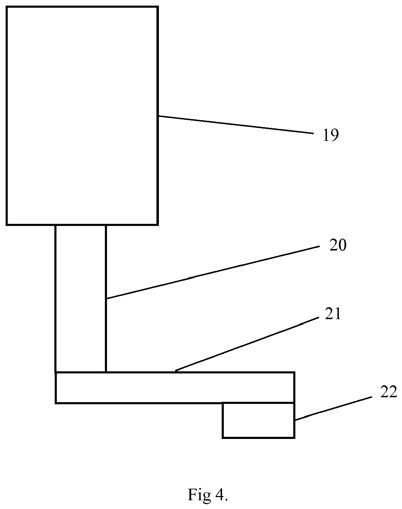

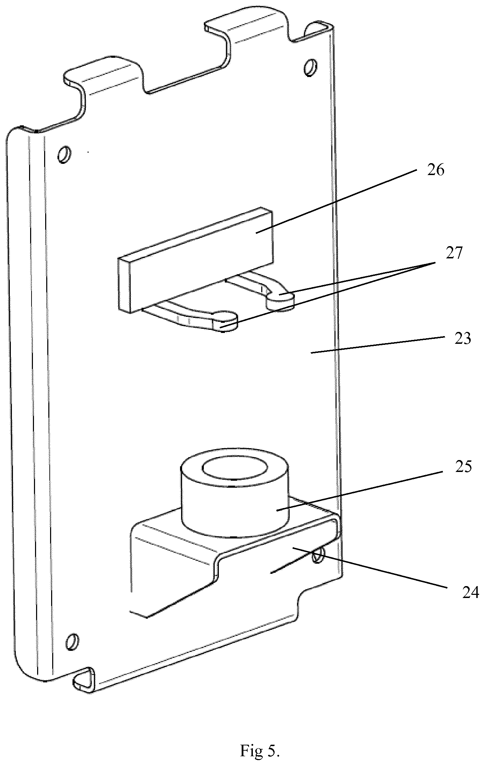

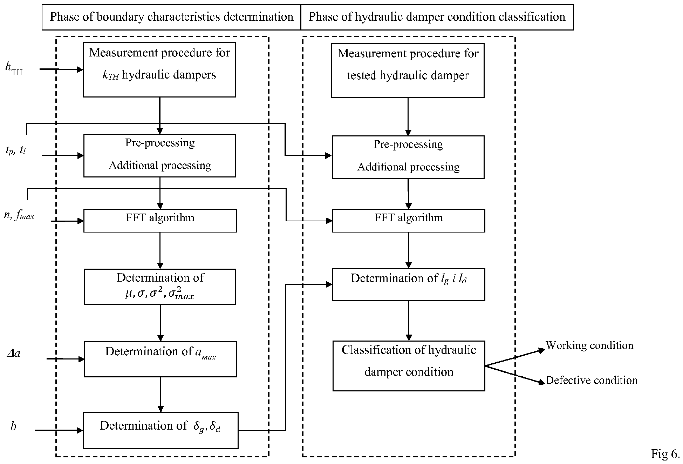

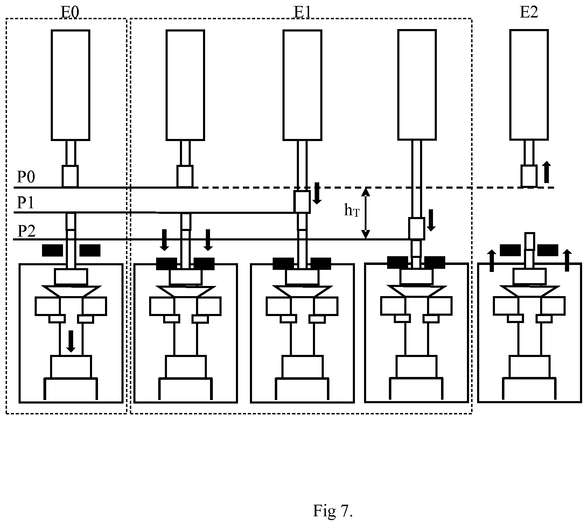

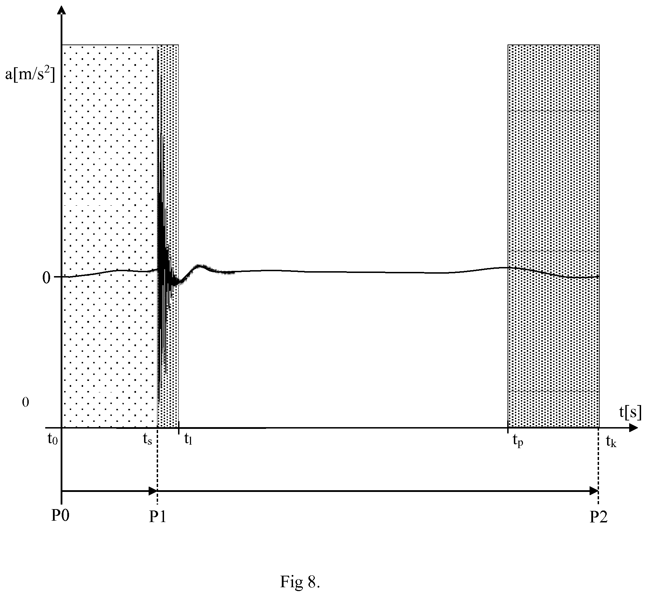

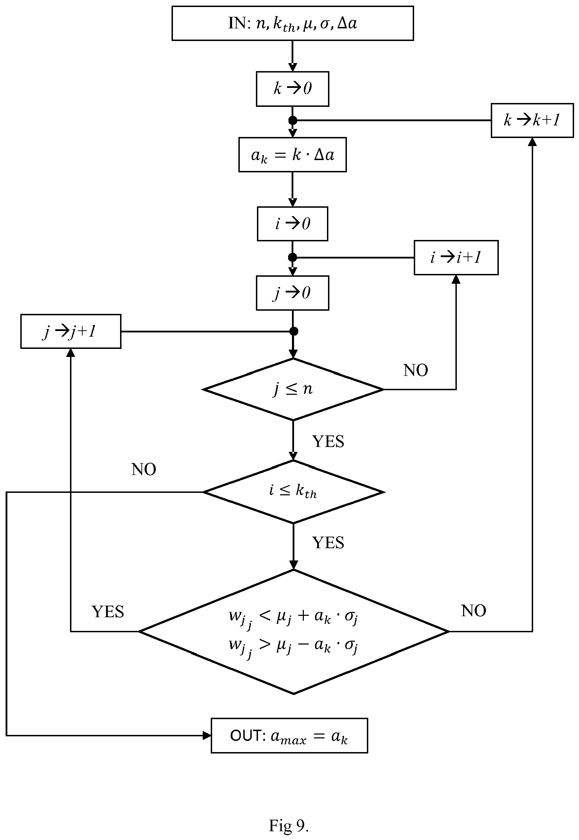

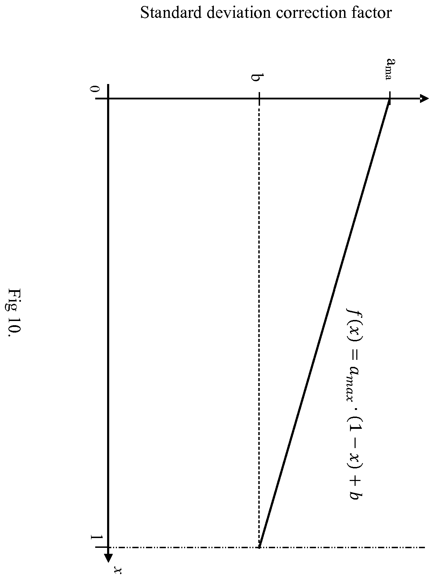

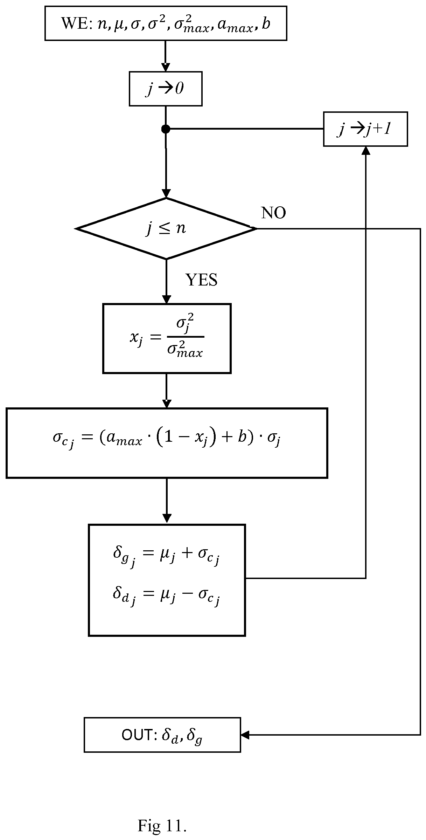

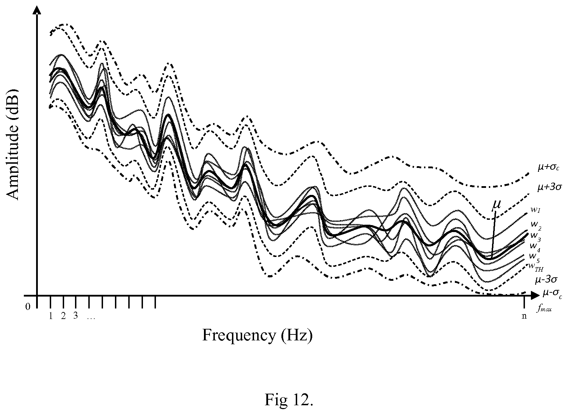

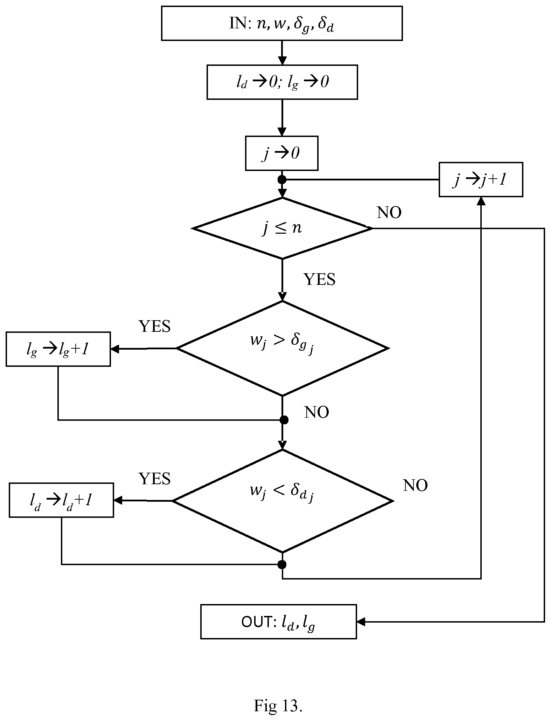

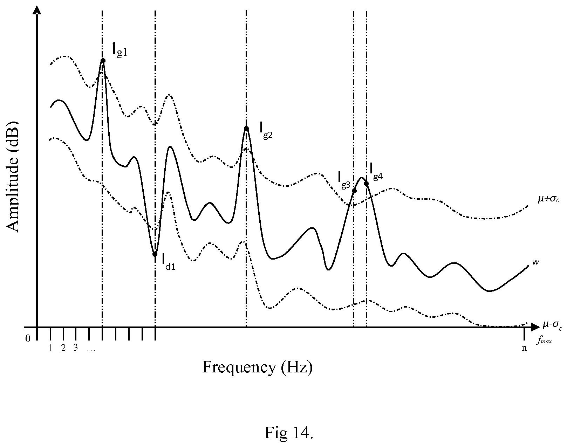

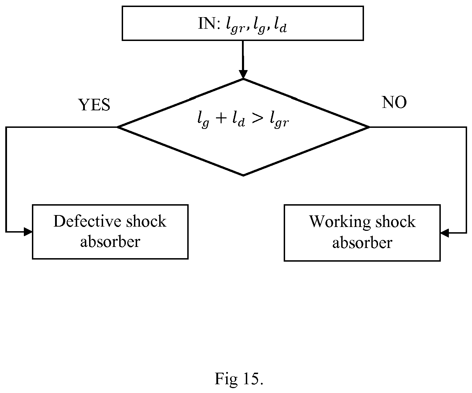

**The subject of the invention is illustrated in an example embodiment shown in the figures, where:** Fig. 1 shows a diagram of a hydraulic damper comprising the following components: 1 - end piece of the piston rod of the hydraulic damper, 1a - longitudinal axis of the hydraulic damper piston rod, 2 - hydraulic damper piston rod, 3 - cover of hydraulic damper seal, 4 - spring seat, 5 - hydraulic damper tube, 6 - hydraulic damper base; Fig. 2 shows a diagram of the device for detecting manufacturing defects of hydraulic dampers, especially hydraulic shock absorbers, comprising the following components: 7 - frame, 8 - control cabinet, 9a-d - parts of the actuating system, where 9a - electrical part of the actuating system, 9b - pneumatic part of the actuating system, 9c - fixing actuator, 9d - forcing actuator; 10 - control panel, 11 - hydraulic damper, 12 - fixing plate, 13 - control system, 14 - measuring computer; Fig. 3 shows a diagram of the forcing actuator (9d) comprising the following components: 15 cylinder of forcing actuator, 16 - piston rod of forcing actuator, 17 - accelerometer, 18 - displacement sensor; Fig. 4 shows a diagram of the fixing actuator comprising the following components: 19 - cylinder of blocking actuator, 20 - piston rod of blocking actuator (9c), 21 - pressure plate, 22 - flexible lining; Fig. 5 shows a diagram of the fixing plate (12) comprising the following components: 23 - base plate, 24 - seat base, 25 - seat, 26 - upper support, 27 - pressure arms; Fig 6 shows a flow diagram of the method of detecting manufacturing defects in hydraulic dampers, especially vehicle shock absorbers; Fig. 7 shows a diagram of the movements made during the measurement procedure; Fig. 8 shows an example of preliminary and additional clipping of the vibration acceleration signal; Fig. 9 shows the algorithm for determining the maximum value of the standard deviation correction factor $a_{max}$; Fig. 10 shows a graphic representation of the correction curve; Fig. 11 shows the algorithm for determining the upper $\delta_g$ and lower $\delta_d$ boundary characteristics in the discrete frequency domain; Fig. 12 shows a graphic representation of the curves used for determining the boundary characteristics; Fig. 13 shows the algorithm for computing the number of incidents of lower and upper boundary characteristics exceedance; Fig. 14 shows a graphic representation of the principle of calculating the number of incidents of lower and upper boundary characteristics exceedance; Fig. 15 shows the algorithm for classifying a hydraulic damper.

The method is used for detecting manufacturing defects in hydraulic dampers, especially hydraulic shock absorbers of tube design, and it consists in comparing a frequency spectrum of a recorded and processed vibration acceleration signal in the time domain with the value of upper $\delta_g$ and lower $\delta_d$ boundary characteristics. The method comprises two phases where measurement procedure is applied:

    1. Phase of determining the boundary characteristics

    2. Phase of classifying the condition of hydraulic dampers

The phase of determining the upper $\delta_g$ and lower $\delta_d$ boundary characteristics takes place in stages in the following steps:

    1. Recording, effected using the measurement procedure, of vibration acceleration signal waveforms of hydraulic dampers with sample size of $k_{TH}$, the dampers being preferably identical in construction with the tested one and having no defects, where $k_{TH}$ is preferably greater than 30;

    2. Preliminary automatic clipping of the signal and additional clipping of the automatically clipped vibration acceleration signal;

    3. Preparation of the frequency spectrum using a fast Fourier transform (FFT) algorithm for each of the $k_{TH}$ recorded vibration acceleration signal waveforms with the splitting of the frequency domain in the $0$-$f_{max}$ range into $n$ intervals;

    4. Computation of the values of the mean $\mu_j$, standard deviation $\sigma_j$ and variance $\sigma_j^2$ for each of the n intervals, where $j \in \langle 1.. n \rangle$;

    5. Determination the upper $\delta_{gj}$ and lower $\delta_{dj}$ boundary characteristics based on the values of the mean $\mu_j$, standard deviation $\sigma_j$ and variance $\sigma_j^2$ for each of the *n* intervals, where $j \in \langle 1.. n \rangle$, using the algorithms, described below, for determining the maximum value of the standard deviation correction factor and for determining the correction curve.

The measurement procedure comprising the measurement of vibration signal waveforms is effected with the use of the device for detecting manufacturing defects of hydraulic dampers being the object of this invention and includes the following subsequent stages:

- Stage 0 (E0) - hydraulic damper (11) is placed on the fixing plate (12) so that its base (6) is located in the seat (25), and the tube (5) rests against the upper support (26) and is supported by arms (27); the piston rod of the blocking actuator (20) moves down and by means of pressure plate (21) presses the cover of the hydraulic damper seal (3) through flexible lining (22); the piston rod of the forcing actuator (16) is in its upper end position P0 at the time $t_g$,
- Stage I (E1) - the piston rod of the forcing actuator (16) moves down at a speed regulated by the control system (13) and attains position P1, at the time $t_s$, in which the accelerometer (17) makes contact with the end of the piston rod of the hydraulic damper (1). After that the movement at the speed regulated by the control system (13) is continued until the forcing actuator (9d) controlled by the displacement sensor (18) attains the set outward working position $h_{TH}$ - position P2, at the time $t_k$. Recording of the vibration acceleration signal by the accelerometer (17) is initiated by the start of movement from position P0 and terminated by reaching the position P2.
- STAGE II (E2) - the forcing actuator (9d) makes a return movement from position P2 to initial position P0, the blocking actuator (9c) moves up and releases the hydraulic damper (11).
- STAGE III (E3) - the shock absorber is classified according to the method described below and the result of classification is displayed;
- STAGE IV (E4) - the hydraulic damper (11) is removed from the device for detecting manufacturing defects of hydraulic dampers.

In the phase of determining reference characteristics the signal recorded in step 2 is subjected to two-stage preprocessing. The first stage consists in automatic clipping of the signal in the time domain by the range of $t_0$-$t_s$, wherein the $t_s$ point is determined by the instant the accelerometer (17) comes into contact with the end of the hydraulic damper piston rod (1) and while $t_k$ is determined by the instant the accelerometer (17) stops contacting with the end of the hydraulic damper piston rod (1). The instant corresponding to the contact of the accelerometer (17) holder with the end of the hydraulic damper piston rod (1) corresponds to the maximum amplitude of the vibration acceleration recorded in the signal exceeding the set amplitude level, preferably equal to half of the measuring range of the accelerometer (1). Moreover, after preliminary automatic clipping of the signal, it can be clipped additionally by the range of $t_s$-$t_l$ or by the range of $t_p$-$t_k$, where the values $t_l$, $t_p$ are freely definable by the user. Recording is performed according to the sequence above for each of the $k_{TH}$ hydraulic dampers.

Then all recorded signal waveforms are processed using an FFT algorithm into a signal spectrum in the frequency domain, wherein the frequency domain in the range 0-$f_{max}$ is split into $n$ intervals of equal length, where $n$ is specified by the user. For each of the $n$ intervals of the frequency domain of the vibration acceleration signal spectrum a mean value is calculated:

$$\mu_j = \frac{\sum_{i=1}^{k_{TH}} w_{j_i}}{k_{TH}}$$

Where:
$j \in \langle 1{:}n \rangle$

$\mu_j$ - mean value in the set of $k_{TH}$ measurements within the given frequency interval,
$w_{j_i}$ - $i$-th measured value in the set of $k_{TH}$ measurements within the defined frequency interval,
$k_{TH}$ - number of measurements (number of hydraulic dampers used to determine the reference characteristics),

Value of the standard deviation:

$$\sigma_j = \sqrt{\frac{\sum_{i=1}^{k_{TH}}(w_{j_i} - \mu_j)^2}{k_{TH}}}$$

Where:
$j \in \langle 1{:}n \rangle$

$\sigma_j$ - value of standard deviation in the set of $k_{TH}$ measurements within the given frequency interval,
$w_{j_i}$ - $i$-th measured value in the set of $k_{TH}$ measurements within the defined frequency interval,
$k_{TH}$ - number of measurements (number of hydraulic dampers used to determine the reference characteristics),

And the value of variance:

$$\sigma_j^2 = \frac{\sum_{i=1}^{k_{TH}}(w_{j_i} - \mu_i)^2}{k_{TH}}$$

Where:
$j \in \langle 1{:}n \rangle$

$\sigma_j^2$ - value of variance in the set of $k_{TH}$ measurements within the given frequency interval,
$w_{j_i}$ - $i$-th measured value in the set of $k_{TH}$ measurements within the defined frequency interval,
$k_{TH}$ - number of measurements (number of hydraulic dampers used to determine the reference characteristics).

In addition, from the designated set of variance values $\sigma_j^2$, where $j \in \langle 1{:}\, n \rangle$, the maximum value $\sigma_{max}^2 = (\sigma_1^2, \dots, \sigma_n^2)$ is determined.

Afterwards, based on mean values $\mu_j$, values of standard deviation $\sigma_j$ and values of variance $\sigma_j^2$ for each of the $n$ intervals, where $j \in \langle 1{:}n \rangle$, the maximum value of the standard deviation correction factor is determined. Determination of the correction factor is done iteratively, where in every step of the iteration the value of the standard deviation correction factor is incremented by the value of the parameter $\Delta a$ within the range of $(0.. a_{max})$, where $a_{max}$ takes the value of $a_k$, which for each of the $n$ frequency intervals satisfies the condition that for each value $w_{j_i}$, where $j \in \langle 1.. \, n \rangle$ and $i \in \langle 1.. \, k_{th} \rangle$:

$$(w_{j_i} < \mu_j + a_k \cdot \sigma_j) \; and \; (w_{j_i} > \mu_j - a_k \cdot \sigma_j)$$

where:

$j \in \langle 1{:}n \rangle$

$w_{j_i}$ - $i$-th measured value in the set of $k_{TH}$ measurements within the defined frequency interval;

$a_k$ - current value of the standard deviation correction factor for the $k$-th iteration,

$k$ - successive iteration number;

$\sigma_j$ - value of standard deviation in the set of $k_{TH}$ measurements within the given frequency interval,

$\mu_j$ - mean value in the set of $k_{TH}$ measurements within the given frequency interval.

Then, based on the determined values of the variance and of the maximum variance, the ratio of the variance and the maximum variance is determined according to the formula:

$$x_j = \frac{\sigma_j^2}{\sigma_{max}^2}$$

In addition, based on the determined maximum value of the standard deviation correction for each $j \in \langle 1 .. \, n \rangle$, the values of the adjusted standard deviation are determined which are given by the formula, taking into account the base adjustment multiplication factor which is specified by the user and is preferably equal to 3:

$$\sigma_{c_j} = \left( a_{max} \cdot \left( 1 - x_j \right) + b \right) \cdot \sigma_j$$

Where:

$j \in \langle 1{:}n \rangle$

$\sigma_{c_j}$ - adjusted standard deviation for the given frequency interval

$a_{max}$ - maximum standard deviation correction factor

$x_j$ - ratio of the value of variance to the value of maximum variance for the given frequency interval

$b$ - basic deviation adjustment multiplication factor

$\sigma_j$ - standard deviation for the given frequency interval

Then the lower and upper boundary characteristics are determined from the following formulas:

$$\delta_{g_j} = \mu_j + \sigma_{c_j}$$

$$\delta_{d_j} = \mu_j - \sigma_{c_j}$$

where:

$j \in \langle 1{:}n \rangle$

$\delta_{g_j}$ - upper boundary characteristics;

$\delta_{d_j}$ - lower boundary characteristics;

$\sigma_{c_j}$ - adjusted standard deviation for the given frequency interval;

$\mu_j$ - mean value in the set of $k_{TH}$ measurements within the given frequency interval,

The determined values of the lower and upper level of acceptability are used in the phase of classifying the condition of hydraulic dampers. The phase of classifying the condition of hydraulic dampers takes place in the following steps:

1. Recording of the vibration acceleration signal waveform from the tested hydraulic damper using the measurement procedure;

2. Preliminary automatic clipping of the signal and additional clipping of the automatically clipped vibration acceleration signal;

3. Preparation of the frequency spectrum using a fast Fourier transform (FFT) algorithm for each of the $k_{TH}$ recorded vibration acceleration signal waveforms with the splitting of the frequency domain in the 0-$f_{max}$ range into $n$ intervals;

4. Comparison of the recorded vibration acceleration signal with the determined values of lower and upper level of acceptability and computation of the number of incidents of lower and upper boundary characteristics exceedance.

5. Indication of the result of comparison

In the 4th step the number $l_d$ of intervals is computed for which the following inequality is true:

$$w_j < \delta_{d_j}$$

Where:

$j \in \langle 1{:}n \rangle$

$w_j$ - measurement value for the $j$-th frequency interval under consideration

$\delta_{d_j}$ - value of the acceptance level for the $j$-th frequency interval under consideration then the number $l_d$ of intervals is computed for which the following inequality is true:

$$w_j > \delta_{g_j}$$

Where:

$j \in \langle 1{:}n \rangle$

$w_j$ - measurement value for the $j$-th frequency interval under consideration

$\delta_{g_j}$ - value of the acceptance level for the $j$-th frequency interval under consideration

A hydraulic damper is classified as fit when the sum of $l_g$ and $l_d$ is less than the limit value $l_{gr}$ defined by the user, meaning that the following condition is met:

$$l_{gr} > l_g + l_d$$

Measurements are made using a device for detecting manufacturing defects of hydraulic dampers, especially hydraulic shock absorbers, said device enabling recording and processing of signals from an accelerometer (1). The device for detecting manufacturing defects of hydraulic dampers, especially hydraulic shock absorbers, has a frame (7), a control cabinet (8), a control system (13), a measuring computer (14), a control panel (10), a fixing plate (12) and an actuating system (9a-d), the said actuating system including an electrical part of the actuating system (9a), a pneumatic part of the actuating system (9b), a blocking actuator (9c) and a forcing actuator (9d). The control cabinet (8) is attached to the rear part of the frame (7). The control cabinet (8) houses the electrical part of the actuating system (9a), the control system (13) and the measuring computer (14). The measuring computer (14) and the control system (13) are connected with each other by means of a cable. The connection is designed for exchanging data between the measuring computer (14) and the control system (13). The control system (13) sends to the measuring computer (14) information on the start and end of actuator movements (9c and 9d). The measuring computer (14) sends to the control system (13) information on the result of classification. The control panel (10) is connected with the measuring computer (14) and with the control system (13) and it serves the purpose of entering setup parameters: $h_{TH}, t_l, t_p$, n, $f_{max}$, $l_{gr}$, $\Delta a$, b and displaying the result of classification and the measurement results. The forcing actuator (9d) has a forcing actuator piston rod (16), a displacement sensor (18), an accelerometer (17). The forcing actuator (9d) pushes the piston rod of the hydraulic damper (2). The accelerometer (17) is attached to the end of the piston rod of the forcing actuator (9d) in such manner that the axis of the piston rod of the hydraulic damper (1a) and the axis of the accelerometer (17) are parallel to each other, preferably arranged in one axis. Moreover, the accelerometer (17) is attached in such manner that it remains in contact with the end of the hydraulic damper piston (1) throughout the duration of movement P1-P2. The displacement sensor (18) is located on the cylinder of the forcing actuator (15). The blocking actuator has a pressure plate (21) with flexible lining (22) made of plastic of Shore A hardness 93-98. The blocking actuator (9c) blocks the hydraulic damper (11) in the fixing plate (12) and secures it firmly by pressing the hydraulic damper (11) through the cover of the hydraulic damper seal (3). The actuating system (9a-d), with the forcing (9d) and blocking (9c) actuators, is connected with the control system (13). The control system (13) controls the actuating system (9a-d) and allows the execution of movements by the forcing (9d) and blocking (9c) actuators, and in addition it maintains the repeatable characteristics of speed as a function of the displacement of the forcing actuator piston rod (16). The fixing plate (12) has a base plate (23), a seat base (24), an upper support (26), pressing arms (27) and seat (25).

The fixing plate (12) is attached in the front part of the frame (7) and is preferably inclined rearwards in order to facilitate mounting of the hydraulic damper (11) in seat (25). The hydraulic damper (11) is positioned parallel to the fixing plate (12). The upper support (26) is below the spring seat (4) and it ensures axial position of the hydraulic damper (11) in relation to the forcing actuator piston rod (16). The pressing arms (27) are attached symmetrically on both sides of the upper support (26) and they ensure stable and repeatable positioning of the hydraulic damper (11) in relation to the forcing actuator (9d) and prevent its sideways movement during the pushing of the hydraulic damper piston rod (2). The seat base (24) is located in the lower part of the fixing plate (12) and it serves as a supporting member for seat (25). The seat (25), matched to the base of hydraulic damper (6), is attached to the seat base (24). Moreover, the seat (25) is made of a vibration damping material, which together with flexible lining (22) isolate the hydraulic damper (11) from vibrations from the surroundings.

## Claims

1. A method for detecting manufacturing defects of hydraulic dampers, especially hydraulic shock absorbers described herein applies a measurement procedure consisting of a set of computational tasks performed in a specific sequence with the use of measuring computer (14) in order to record a vibration acceleration signal of mechanical vibrations of a piston rod (1) of a hydraulic damper (11) displacing by a forcing actuator, while the vibration acceleration signal is obtained by an accelerometer (17), moreover the method comprises two phases, wherein phase one consists of subsequent operations of the measurement procedure, followed by automatic pre-processing of the vibration acceleration signal, processing of the vibration acceleration signal, processing of the signal using an FFT algorithm, determination of statistical characteristics of the spectrum, such as mean, variance and standard deviation, followed by the determination of the values of upper and lower boundary characteristics for each of the n frequency intervals of the spectrum domain, whereas phase two includes, in sequence, the measurement procedure, automatic pre-processing of the vibration acceleration signal, additional processing of the vibration acceleration signal, processing of the signal using an FFT algorithm, determination of the values of upper and lower number of exceedance of boundary characteristics, comparison of the sum of the number of the upper and lower exceedance of boundary characteristics with the corresponding limit values and, based on that, indication of the classification result in the form of two conditions: fit or unfit, wherein the measurement procedure consists of the following steps: first, the hydraulic damper (11) is placed on a fixing plate (12) and fixed in place; then the forcing actuator (9a-d) moves down at a speed controlled by the control system (13) and attains a position in which the accelerometer (1) fastened to the piston rod (16) of the forcing actuator (15) makes contact with the end of the piston rod (2) of the hydraulic damper, after that the movement at the speed controlled by the control system is continued until the forcing actuator attains a set outward working position $h_{TH}$, whereas the vibration acceleration signal is recorded throughout the duration of the outward movement of the piston rod of the forcing actuator, **characterized in that** the hydraulic damper is fixed in place during the measurement procedure by clamping it with a hydraulic damper blocking actuator (9c), and **in that** the hydraulic damper is positioned so that the longitudinal axis of the hydraulic damper piston rod is directed upwards, whereby the vibration acceleration signal is recorded by the accelerometer which is secured to the end of the piston rod of the forcing actuator, and by using standard sample hydraulic dampers in the phase of determining boundary characteristics, said standard sample hydraulic dampers being of a design identical to that of the tested hydraulic damper; and **in that** automatic clipping of the vibrational acceleration signal is effected in the time domain by the range of $t_0$-$t_s$, wherein the $t_s$ point is determined by the instant the accelerometer comes into contact with the end of the hydraulic damper piston rod, while $t_0$ is determined by the instant the piston rod of the forcing actuator (16) is in its upper end position, and **in that** in order to determine the boundary characteristics an iteratively determined maximum correction factor of the standard deviation $a_{max}$ and adjusted standard deviation $\sigma_{cj}$ are used.

2. A method according to claim 1 **characterized in that** the iterative determination of the standard deviation correction factor $a_{max}$ consists **in that** in every step of the iteration algorithm the value of the standard deviation correction factor is incremented by the value of the parameter $\Delta a$ within the range of $(0.. a_{max})$, where $a_{max}$ takes the value of $a_k$, which for each of the $n$ frequency intervals satisfies the condition that for each value $w_{ji}$, where $j \in \langle 1..n \rangle$ and $i \in \langle 1.. k_{th} \rangle$:

$$\left(w_{j_i} < \mu_j + a_k \cdot \sigma_j\right) \ and \ \left(w_{j_i} > \mu_j - a_k \cdot \sigma_j\right)$$

where:

$j \in \langle 1:n \rangle$

$w_{j_i}$ - $i$-th measured value in the set of $k_{TH}$ measurements within the defined frequency interval,

$a_k$ - current value of the standard deviation correction factor for the k-th iteration,

$k$ - successive iteration number,

$\sigma_j$ - value of standard deviation in the set of $k_{TH}$ measurements within the given frequency interval,

$\mu_j$ - mean value in the set of $k_{TH}$ measurements within the given frequency interval,

3. The method according to claim 1 **characterized in that** the adjusted standard deviation is determined from the function:

$$\sigma_{c_j} = \left(a_{max} \cdot \left(1 - x_j\right) + b\right) \cdot \sigma_j$$

where:

$j \in \langle 1:n \rangle$

$\sigma_{c_j}$ - adjusted standard deviation for the given frequency interval,

$a_{max}$ - maximum standard deviation correction factor.

$x_j$ - ratio of the value of variance to the value of maximum variance for the given frequency interval, $x_j = \dfrac{\sigma_j^2}{\sigma_{max}^2}$

$b$ - basic deviation adjustment multiplication factor selected by the user, preferably equal to 3,

$\sigma_j$ - standard deviation for the given frequency interval

4. A device for detecting manufacturing defects of hydraulic shock absorbers, adapted for use with the method of claim 1, comprising a control cabinet (8), a control system (13), a measuring computer (14), a control panel (10), a frame (7), to the rear part of which is attached the control cabinet (8) which houses the control system (13) and the measuring computer (14) and the control panel (10) being attached to the front part of the frame, a fixing plate (12) mounted in the inner space of the frame, actuating system (9a-d) in the rear part of the inner space of the frame, the said actuating system driving a forcing actuator (9d) which pushes the shock absorber piston rod (11), accelerometer (17) attached to the end of the piston rod of the forcing actuator (9d) in such manner that the axis of the piston rod of the shock absorber hydraulic damper (1a) and the axis of the accelerometer (17) are parallel to each other, preferably arranged in one axis, **characterized in that** the shock absorber seat (25) in which the shock absorber's end opposite the shock absorber piston rod is placed, is made of plastic of Shore A hardness 93-98 and **in that** the front side of the plate (12) located in the front part of the frame (7) has its upper edge inclined from the vertical of the frame towards the inside of the frame so as to enable placing a shock absorber in the axis of forcing actuator (9d) operation.

**Patentansprüche**

1. Ein Verfahren zur Erkennung von Herstellungsfehlern bei Hydraulikdämpfern, insbesondere bei hierin beschriebenen Hydraulikstoßdämpfern, die ein Messverfahren anwendet, das aus einer Reihe von Berechnungsaufgaben besteht, die in einer bestimmten Reihenfolge unter Verwendung des Messrechners (14) ausgeführt werden, um ein Schwingungsbeschleunigungssignal von mechanischen Schwingungen einer Kolbenstange (1) einer Hydraulikdämpfer (11)-Verschiebung durch ein Zwangsstellglied aufzuzeichnen, während das Schwingungsbeschleunigungssignal von einem Beschleunigungsmesser (17) empfangen wird, ferner umfasst das Verfahren zwei Phasen, wobei Phase Eins aus aufeinanderfolgenden Operationen des Messverfahrens besteht, gefolgt von der automatischen Vorverarbeitung des Schwingungsbeschleunigungssignals, der Verarbeitung des Schwingungsbeschleunigungssignals, der Verarbeitung des Signals durch Verwendung eines FFT-Algorithmus, der Bestimmung von statistischen Eigenschaften des Spektrums, wie z. B. Mittelwert, Varianz und Standardabweichung, gefolgt von der Bestimmung der Werte der oberen und unteren Grenzeigenschaften für jedes der n Frequenzintervalle der Spektrum-Domäne, wobei Phase Zwei der Reihe nach das Messverfahren, die automatische Vorverarbeitung des Schwingungsbeschleunigungssignals, die zusätzliche Verarbeitung des Schwingungsbeschleunigungssignals, die Verarbeitung des Signals unter Verwendung eines FFT-Algorithmus, die Bestimmung der Werte der oberen und unteren Anzahl von Überschreitungen von Grenzeigenschaften, den Vergleich der Summe der Anzahl der oberen und unteren Überschreitung der Grenzeigenschaften mit den entsprechenden Grenzwerten und, darauf basierend, die Angabe des Klassifizierungsergebnisses in Form von zwei Bedingungen umfasst: geeignet oder ungeeignet, wobei das Messverfahren aus den folgenden Schritten besteht: zuerst wird der Hydraulikdämpfer (11) auf einer Befestigungsplatte (12) platziert und vor Ort fixiert; dann bewegt sich das Zwangsstellglied (9a-d) mit einer vom Steuerungssystem (13) gesteuerten Geschwindigkeit nach unten und erreicht eine Position, bei der der Beschleunigungsmesser (1, der an der Kolbenstange (16) des Zwangsstellglieds (15) befestigt ist, das Ende der Kolbenstange (2) des Hydraulikdämpfers berührt, danach wird die Bewegung mit der durch das Steuerungssystem gesteuerten Geschwindigkeit fortgesetzt, bis das Zwangsstellglied eine eingestellte äußere Arbeitsposition $h_{TH}$ erreicht, wobei das Schwingungsbeschleunigungssignal für die Dauer der Auswärtsbewegung der Kolbenstange des Zwangsstellglieds aufgezeichnet wird, **dadurch gekennzeichnet, dass** der Hydraulikdämpfer während des Messverfahrens vor Ort durch Spannen mit einem Hydraulikdämpfer-Blockierstellglied (9c) fixiert wird, und dass der Hydraulikdämpfer so positioniert wird, dass die Längsache der Hydraulikdämpfer-Kolbenstange nach oben gerichtet ist, wobei das Schwingungsbeschleunigungssignal vom Beschleunigungsmesser, das am Ende der Kolbenstange des Zwangsstellglieds befestigt ist, und durch Verwendung von Standardprobenhydraulikdämpfern in der Phase der Bestimmung der Grenzeigenschaften aufgezeichnet wird, wobei genannte Standardprobenhydraulikdämpfer vom Design her mit dem getesteten Hydraulikdämpfer identisch sind; und dass das automatische Beschneiden des Schwingungsbeschleunigungssignals in der Zeitdomäne durch einen Bereich von $t_0$-$t_s$ bewirkt ist, wobei der $t_s$-Punkt durch den Augenblick bestimmt wird, in dem der Beschleunigungsmesser mit dem Ende der Kolbenstange des Hydraulikdämpfers in Kontakt tritt, während to durch den Augenblick bestimmt wird, in dem die Kolbenstange des Zwangsstellglieds (16) in ihrer oberen Endposition ist, und dass zur Bestimmung der Grenzeigenschaften ein iterativ bestimmter maximaler Korrekturfaktor von der Standardabweichung $a_{max}$ und eine angepasste Standardabweichung $\sigma_{c_j}$ anwendet werden.

2. Ein Verfahren gemäß Anspruch 1 **dadurch gekennzeichnet, dass** die iterative Bestimmung des Standardabweichungsfaktors $a_{max}$ darin besteht, dass bei jedem Schritt des Iterationsalgorithmus der Wert des Standardabweichungskorrekturfaktors um den Wert des Parameters Δa innerhalb des Bereichs (0..$a_{max}$) erhöht wird, wobei $a_{max}$ den Wert von $a_k$ übernimmt, das für jedes der $n$ Frequenzintervalle die Bedingung erfüllt, das für jeden Wert $w_{j_i}$, wo j ∈ ⟨1..n⟩ und i ∈ ⟨1..k_{th}⟩:

$$\left(w_{j_i} < \mu_j + a_k \cdot \sigma_j\right) \; und \; \left(w_{j_i} > \mu_j - a_k \cdot \sigma_j\right)$$

wobei:
$j \in \langle 1{:}n \rangle$

$w_{ji}$ $i$-te gemessene Wert in der Reihe von $k_{TH}$ Messungen innerhalb des definierten Frequenzintervalls,
$a_k$ - der aktuelle Wert des Standardabweichungskorrekturfaktors für die k-te Iteration,
$k$ - die folgende Iterationsnummer,
$\sigma_j$ - der Wert der Standardabweichung in der Reihe der $k_{TH}$ Messungen innerhalb des gegebenen Frequenzintervalls,
$\mu_j$ - den Wert der Reihe der $k_{TH}$ Messungen innerhalb des gegebenen Frequenzintervalls bezeichnet,

3. Das Verfahrengemäß Anspruch 1 **dadurch gekennzeichnet, dass** die angepasste Standardabweichung durch die Funktion bestimmt wird:

$$\sigma_{c_j} = \left(a_{max} \cdot \left(1 - x_j\right) + b\right) \cdot \sigma_j$$

wobei:
$j$ E (1: $n$)

$\sigma_{c_j}$ - die Standardabweichung für das gegebene Frequenzintervall,
$a_{max}$ - der maximale Standardabweichungskorrekturfaktor,

$x_j$ - das Verhältnis des Varianzwertes gegenüber dem maximalen Varianzwert für das gegebene Frequenzintervall $x_j = \dfrac{\sigma_j^2}{\sigma_{max}^2}$ ,

$b$ - die Grundabweichung des vom Benutzer ausgewählten Anpassungsmultiplikationsfaktors ist, vorzugsweise gleich 3,

$\sigma_j$ - die Standardabweichung für das gegebene Frequenzintervall ist,

4. Ein Gerät für die Feststellung der Herstellungsfehler der Hydraulikstoßdämpfer, angepasst für die Verwendung mit dem Verfahren nach Anspruch 1, das einen Steuerkasten (8), ein Steuerungssystem (13), einen Messrechner (14), eine Steuertafel (10), einen Rahmen (7), an dessen hinteren Bereich der Steuerkasten (8) befestigt ist, der das Steuerungssystem (13) und den Messrechner (14) und die Steuertafel (10) beherbergt, die an den vorderen Bereich des Rahmens angebracht ist, eine Befestigungsplatte (12), die im Innenraum des Rahmens angebracht ist, das Stellgliedsystem (9a-d) im hinteren Bereich des Innenraums des Rahmens, das besagte Stellgliedsystem, das ein Zwangsstellglied (9d) betreibt, welches die Stoßdämpfer-Kolbenstange (11) drückt, den Beschleunigungsmesser (17), der am Ende der Kolbenstange des Zwangsstellglieds (9d) derart angebracht ist, dass die Achse der Kolbenstange des Hydraulikdämpfers (1a) und die Achse des Beschleunigungsmessers (17) parallel zueinander sind, vorzugsweise in einer Achse angeordnet, **dadurch gekennzeichnet, dass** der Stoßdämpfer-Sitz (25), in dem das Ende des Stoßdämpfers gegenüber der Stoßdämpfer-Kolbenstange platziert ist, aus Kunststoff der Shore A-Härte 93-98 gefertigt ist, und dass die Vorderseite der Platte (12), die sich im vorderen Bereich des Rahmens (7) befindet, über eine obere Kante verfügt, die ab der Vertikalen des Rahmens aus zum Innern des Rahmens geneigt ist, um die Platzierung eines Stoßdämpfers in der Achse des Betriebs des Zwangsstellglieds (9d) umfasst.

## Revendications

1. Une méthode de détection de défauts de fabrication d'amortisseurs hydrauliques, en particulier d'amortisseurs hydrauliques décrits ici, applique une procédure de mesure consistant en un ensemble de tâches de calcul effectuées dans une séquence spécifique à l'aide d'un ordinateur de mesure (14) afin d'enregistrer un signal d'accélération de vibration de vibrations mécaniques d'une tige de piston (1) d'un amortisseur hydraulique (11) se déplaçant par un actionneur forçant, tandis que le signal d'accélération de vibration est obtenu par un accéléromètre (17), en outre la méthode comprend deux phases, dans laquelle la première phase consiste en des opérations ultérieures de la procédure de mesure, suivies du prétraitement automatique du signal d'accélération des vibration, du traitement du signal d'accélération de vibrations, du traitement du signal à l'aide d'un algorithme FFT, de la détermination des caractéristiques statistiques du spectre, telles que moyenne, variance et écart-type, suivis de la détermination des valeurs des caractéristiques des limites supérieure et inférieure pour chacun des n intervalles de fréquence du domaine spectral, tandis que la phase deux comprend, en séquence, la procédure de mesure, le prétraitement automatique du signal d'accélération de vibration, le traitement supplémentaire du signal d'accélération de vibration, le traitement du signal à l'aide d'un algorithme FFT, la détermination des valeurs du nombre supérieur et inférieur de dépassement de caractéristiques des limites, la comparaison de la somme du nombre des dépassements supérieurs et inférieurs des caractéristiques des limites avec les valeurs limites correspondantes et, sur cette base, l'indication du résultat du classement sous la forme de deux conditions : propre ou impropre, dans laquelle la procédure de mesure comprend les étapes suivantes : tout d'abord, l'amortisseur hydraulique (11) est placé sur une plaque de fixation (12) et fixé en place; puis l'actionneur forçant (9a-d) descend à une vitesse commandée par le système de commande (13) et atteint une position dans laquelle l'accéléromètre (1) fixé à la tige de piston (16) de l'actionneur forçant (15) entre en contact avec l'extrémité de la tige de piston (2) de l'amortisseur hydraulique, après quoi le mouvement à la vitesse commandée par le système de commande se poursuit jusqu'à ce que l'actionneur forçant atteigne une position de travail fixé vers l'extérieur $h_{TH}$, tandis que le signal d'accélération de vibration est enregistré pendant toute la durée du mouvement vers l'extérieur de la tige de piston de l'actionneur forçant, **caractérisée en ce que** l'amortisseur hydraulique est fixé en place pendant la procédure de mesure en le serrant avec un actionneur de blocage d'amortisseur hydraulique (9c), et **en ce que** l'amortisseur hydraulique est positionné de telle sorte que l'axe longitudinal de la tige de piston de l'amortisseur hydraulique soit dirigé vers le haut, grâce à quoi le signal d'accélération de vibration est enregistré par l'accéléromètre qui est fixé à l'extrémité de la tige de piston de l'actionneur forçant, et en utilisant des amortisseurs hydrauliques d'échantillons standard dans la phase de détermination des caractéristiques de limite, lesdits amortisseurs hydrauliques d'échantillons standard étant d'une conception identique à celle de l'amortisseur hydraulique testé; et **en ce que** la coupure automatique du signal d'accélération vibratoire est effectuée dans le domaine temporel par la plage de $t_0$-$t_s$, dans

laquelle le point $t_s$ est déterminé par l'instant où l'accéléromètre entre en contact avec l'extrémité de la tige de piston de l'amortisseur hydraulique tandis que to est déterminé par l'instant où la tige de piston de l'actionneur forçant (16) est dans sa position extrême supérieure, et **en ce que** pour déterminer les caractéristiques de limite, un facteur de correction maximum déterminé itérativement de l'écart-type $a_{max}$ et un écart-type ajusté $\sigma_{c_j}$ sont utilisé.

2. Une méthode selon la revendication 1, **caractérisée en ce que** la détermination itérative du facteur de correction d'écart-type $a_{max}$ consiste **en ce qu'**à chaque étape de l'algorithme d'itération la valeur du facteur de correction d'écart-type est incrémentée par la valeur du paramètre $\Delta a$ dans la plage de $(0.. a_{max})$, où $a_{max}$ prend la valeur de $a_k$, qui pour chacun des n intervalles de fréquence remplit la condition que pour chaque valeur $w_{j_i}$, où $j \in \langle 1..n \rangle$ et $i \in \langle 1..k_{th} \rangle$:

$$\left( w_{j_i} < \mu_j + a_k \cdot \sigma_j \right) \; _{et} \; \left( w_{j_i} > \mu_j - a_k \cdot \sigma_j \right)$$

où :
$j \in \langle 1:n \rangle$

$w_{j_i}$ i-ème valeur mesurée dans l'ensemble des $k_{TH}$ mesures dans l'intervalle de fréquence défini,
$a_k$ - valeur actuelle du facteur de correction d'écart-type pour la k-ième itération,
$k$ - numéro d'itération successive,
$\sigma_j$ -valeur de l'écart-type dans l'ensemble des $k_{TH}$ mesures dans l'intervalle de fréquence donné,
$\mu_j$ - valeur moyenne dans l'ensemble des $k_{TH}$ mesures dans l'intervalle de fréquence donné,

3. La méthode selon la revendication 1, **caractérisée en ce que** l'écart-type ajusté est déterminé à partir de la fonction :

$$\sigma_{c_j} = \left( a_{max} \cdot \left( 1 - x_j \right) + b \right) \cdot \sigma_j$$

où :
$j \in \langle 1:n \rangle$

$\sigma_{c_j}$ - écart-type ajusté pour l'intervalle de fréquence donné,
$a_{max}$ - facteur de correction d'écart-type maximal.
$x_j$ - rapport de la valeur de la variance à la valeur de la variance maximale pour l'intervalle de fréquence donné,

$$x_j = \frac{\sigma_j^2}{\sigma_{max}^2}$$

$b$ - facteur de multiplication d'ajustement de l'écart de base choisi par l'utilisateur, de préférence égal à 3,
$\sigma_j$ - écart-type pour l'intervalle de fréquence donné.

4. Un dispositif pour détecter des défauts de fabrication d'amortisseurs hydrauliques, adapté pour être utilisé avec la méthode selon la revendication 1, comprenant une armoire de commande (8), un système de commande (13), un ordinateur de mesure (14), un panneau de commande (10), un châssis (7), à l'arrière duquel est fixée l'armoire de commande (8) qui abrite le système de commande (13) et l'ordinateur de mesure (14) et le panneau de commande (10) étant fixé à la partie avant du châssis, une plaque de fixation (12) montée dans l'espace intérieur du châssis, un système d'actionnement (9a-d) dans la partie arrière de l'espace intérieur du châssis, ledit système d'actionnement entraînant un actionneur forçant (9d) qui pousse la tige de piston d'amortisseur (11), un accéléromètre (17) fixé à l'extrémité de la tige de piston de l'actionneur forçant (9d) de telle manière que l'axe de la tige de piston de l'amortisseur hydraulique (la) et l'axe de l'accéléromètre (17) sont parallèles entre eux, de préférence disposés dans un axe, **caractérisé en ce que** le siège d'amortisseur (25) dans lequel est placée l'extrémité de l'amortisseur opposée à la tige de piston d'amortisseur, est en plastique de dureté Shore A 93-98 et **en ce que** le côté avant de la plaque (12) situé dans la partie avant du châssis (7) a son bord supérieur incliné de la verticale du châssis vers l'intérieur du châssis de manière à permettre de placer un amortisseur dans l'axe de fonctionnement de l'actionneur forçant (9d).

Fig 1.

Fig 2.

Fig 3.

Fig 4.

Fig 5.

Fig 6.

Fig 7.

Fig 8.

Fig 9.

Fig 10.

$$\text{WE: } n, \mu, \sigma, \sigma^2, \sigma_{max}^2, a_{max}, b$$

$$j \rightarrow 0$$

$$j \rightarrow j{+}1$$

$$j \leq n$$

NO

YES

$$x_j = \frac{\sigma_j^2}{\sigma_{max}^2}$$

$$\sigma_{c_j} = (a_{max} \cdot (1 - x_j) + b) \cdot \sigma_j$$

$$\delta_{g_j} = \mu_j + \sigma_{c_j}$$
$$\delta_{d_j} = \mu_j - \sigma_{c_j}$$

$$\text{OUT: } \delta_d, \delta_g$$

Fig 11.

Fig 12.

Fig 13.

Fig 14.

**EP 3 505 903 B1**

Fig 15.

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 86302935 A2
- EP 86402253 B1
- EP 86402254 B1
- EP 89907781 B1
- EP 94102441 B1
- EP 94115944 A2
- EP 95930380 B1
- EP 98122896 B1
- KR 100745356 B1
- CN 103018056 A